# EUROPEAN PATENT SPECIFICATION

(11) **EP 4 582 833 B1**
(45) Date of publication and mention of the grant of the patent: **19.08.2026**
(21) Application number: 24209335.9
(22) Date of filing: 29.10.2024
(51) Int. Cl.: G01S 7/40, G01S 13/931

(54) **DEVICE AND METHOD FOR SIMULATING AN RF REFLECTIVE OBJECT**
VORRICHTUNG UND VERFAHREN ZUR SIMULATION EINES HF-REFLEKTIERENDEN OBJEKTS
DISPOSITIF ET PROCÉDÉ DE SIMULATION D'UN OBJET RÉFLÉCHISSANT LES RADIOFRÉQUENCES

(30) Priority: 03.01.2024 US 202418403300
(43) Date of publication of application: 09.07.2025
(73) Proprietor: Rohde & Schwarz GmbH & Co. KG, 81671 München (DE)
(72) Inventor: Haberl, Thomas, 80335 Munich (DE); Saalfeld, Maximilian, 80993 Munich (DE)
(74) Representative: Novagraaf Group

(56) References cited:
- EP-A1- 3 812 790
- EP-A1- 3 982 148
- BOKOV ALEXANDER ET AL: "Improving the Accuracy of Digital Simulation of the Radio Signal Propagation Delay", 2019 RADIATION AND SCATTERING OF ELECTROMAGNETIC WAVES (RSEMW), IEEE, 24 June 2019 (2019-06-24), pages 348 - 351, XP033594648, DOI: 10.1109/RSEMW.2019.8792794
- JAIN RAJ: "Channel Models A Tutorial", 21 February 2007 (2007-02-21), XP093251805, Retrieved from the Internet <URL:https://www.cse.wustl.edu/~jain/cse574-08/ftp/channel_model_tutorial.pdf?utm_source=chatgpt.com> [retrieved on 20250218]

## Description

### Technical Field

The present disclosure relates to radio detection and ranging (RADAR) echo generation, and in particular to devices and methods for simulating an RF reflective object and to devices for simulating RF fading.

### Background Art

Radar sensors usually change their signal parameters during object detection depending on the current task in order to gain either improved range resolution or maximum visible distance.

Until now, the signal parameters such as a center frequency are pre-configured manually and the object resp. channel simulation has to be parametrized accordingly. Any deviations from the pre-configured signal parameters caused by a measurement setup or tolerances of the radar sensor device under test (DUT) require manual correction. This applies to simulation of RF reflective objects e.g. in front of the DUT as well as to simulation of RF fading in between a tester and the DUT. BOKOV ALEXANDER ET AL: "Improving the Accuracy of Digital Simulation of the Radio Signal Propagation Delay", IEEE, 24 June 2019, discloses a hardware-in-the-loop simulator that applies deterministic parameters such as delay, Doppler shift, and attenuation to emulate reflections of radar signals in real time. Jain Raj: "Channel Models A Tutorial", McKelvey School of Engineering, 21 February 2007, describes wireless channel models, including Gaussian fading and tapped delay line models, mainly for theoretical and software-based simulations. EP 3 812 790 A1 discloses a radar target simulator configured to generate a virtual target for testing a radar under test. EP 3 982 148 A1 discloses a radar target simulator with no lower target distance limitation and continuous distance emulation.

### Summary

It is an object to overcome the above-mentioned and other drawbacks.

The foregoing and other objects are achieved by the features of the independent claims. Further implementation forms are apparent from the dependent claims, the description and the figures.

According to claim 1 of the claimed invention, a device is provided for simulating an RF reflective object.

According to claim 2 of the claimed invention, a device is provided for simulating RF fading.

The RF signal and the adapted RF signal may be radar signals.

The signal parameters of the RF signal may comprise one or more of: a timing of the RF signal, a frequency of the RF signal, and an average power of the RF signal.

The estimated signal variation-over-time parameters of the RF signal may comprise an estimated frequency offset of the RF signal.

The signal parameter adaptation circuits may respectively be configured for adapting one of the signal parameters of the RF signal.

The simulation parameters, according to the claimed invention, comprise one or more of: a delay of the object in accordance with a simulated radial distance of the object relative to the DUT, a frequency shift of the object in accordance with a simulated radial velocity of the object relative to the DUT, and an attenuation of the object in accordance with a simulated cross-sectional area of the object and the simulated radial distance of the object relative to the DUT.

The simulation parameters, according to the claimed invention, further comprise one of: a zero-mean Gaussian random path attenuation between the object and the DUT, and a power delay profile comprising attenuation values and delay values for a plurality of taps of a tapped delay line fading model.

The signal parameter adaptation circuits may comprise one or more of: a tunable delay circuit for delaying the RF signal in accordance with the delay of the object, a tunable frequency shift circuit for shifting the frequency of the RF signal in accordance with the frequency shift of the object and the estimated frequency offset of the RF signal, and a tunable attenuation circuit for attenuating the RF signal in accordance with the attenuation of the object.

The signal parameter adaptation circuits may further comprise one of: a fading emulation circuit for attenuating the RF signal in accordance with the zero-mean Gaussian random path attenuation, and a fading emulation circuit for attenuating and delaying the RF signal in accordance with the power delay profile.

The device may further comprise a user notification circuit for notifying a user of the device of the estimated signal variation-over-time parameters of the RF signal relative to corresponding user-provided signal parameters of the RF signal.

According to claim 10 of the claimed invention, a measurement system is provided, comprising a device for simulating an RF reflective object according to claim 1 or a device for simulating RF fading according to claim 2; and a device under test, DUT, being a radar sensor preferably for automotive applications.

According to claim 11 of the claimed invention, a method is provided for simulating an RF reflective object.

The method may be performed by a device for simulating an RF reflective object according to claim 1.

### Advantageous Effects

The present disclosure provides automatic analysis of signal parameters and automatic adaptation of simulation parameters of objects which depend on the signal parameters and would have to be corrected manually otherwise.

### Brief Description of Drawings

The above-described aspects and implementations will now be explained with reference to the accompanying drawings, in which the same or similar reference numerals designate the same or similar elements.

The features of these aspects and implementations may be combined with each other unless specifically stated otherwise.

The drawings are to be regarded as being schematic representations, and elements illustrated in the drawings are not necessarily shown to scale. Rather, the various elements are represented such that their function and general purpose become apparent to those skilled in the art.
FIG. 1 illustrates a measurement system including a device in accordance with the present disclosure; and
FIG. 2 illustrates a method in accordance with the present disclosure.

### Detailed Descriptions of Drawings

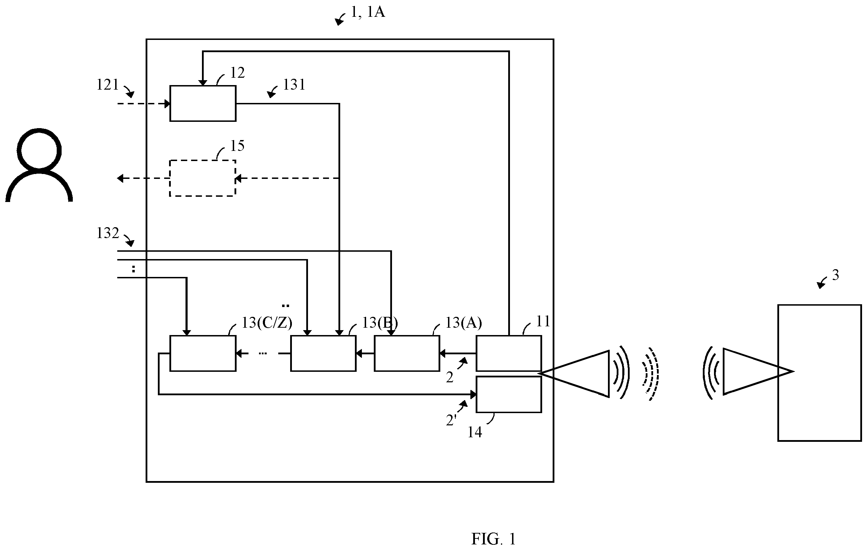

FIG. 1 illustrates a measurement system 1, *1A, 3* including a device 1, *1A* in accordance with the present disclosure.

The measurement system 1, *1A, 3* comprises a device *1* for simulating an RF reflective object according to claim 1 or a device *1A* for simulating RF fading according to claim 2, and a device under test, DUT 3. The DUT 3 may be a radar sensor, preferably for automotive applications.

The device 1, *1A* comprises a receiver or input 11, a signal variation parameter estimation circuit 12, one or more signal parameter adaptation circuits *13, 13A-Z,* a transmitter 14, and may comprise a user notification circuit 15.

The receiver 11 is configured for receiving an RF signal 2, preferably from a device under test, DUT 3 or the input *11* is configured for receiving an RF signal 2, preferably from an RF source such as an RF vector signal generator. In particular, the RF signal 2 may be a radar signal. Likewise, the receiver *11* may comprise a radar receiver.

The signal variation parameter estimation circuit 12 is configured for estimating, based on an analysis of the RF signal 2, one or more signal variation-over-time parameters 131 of the RF signal

In particular, the estimated signal variation-over-time parameters *131* of the RF signal *2* may comprise an estimated frequency offset *Δf* of the RF signal 2, either relative to the (given) frequency *f₀* of the RF signal *2* (i.e., *Δf*) or implicitly (i.e., *f₀*+Δ*f*). Correspondingly, the signal variation parameter estimation circuit *12* may, for instance, comprise an analog-to-digital converter, ADC, a digital down converter, DDC, and a Fast Fourier Transform, FFT, analyzer implemented as a digital circuit (e.g., ASIC, FPGA, DSP or the like).

The one or more signal parameter adaptation circuits *13, 13A-Z* are configured for adapting one or more signal parameters of the RF signal 2 in real-time as a function of one or more simulation parameters *132* and the one or more estimated signal variation-over-time parameters *131* of the RF signal *2*.

The signal parameters of the RF signal 2 may comprise one or more of: a timing of the RF signal *2*, a frequency *f₀* of the RF signal 2, and an average power of the RF signal *2*.

A timing as used herein may refer to a temporal occurrence (e.g., start time, end time) of a pulse of the RF signal *2*.

A power as used herein may refer to an average power (in mW) or power level (in dBm, with reference to 1 mW) of the RF signal *2*.

A frequency as used herein may refer to a center frequency *f₀* of the RF signal *2*.

The simulation parameters *132* comprise one or more of: a delay *Δt* of the object in accordance with a simulated radial distance *r* of the object relative to the DUT *3,* a frequency shift *Δf_{D}* of the object in accordance with a simulated radial velocity v of the object relative to the DUT 3 (i.e., a Doppler frequency shift), and an attenuation α of the object in accordance with a simulated cross-sectional area *σ* of the object - i.e., a radar cross-section, RCS - and the simulated radial distance *r* of the object relative to the DUT *3.* The simulation parameters *132* further comprise one of a zero-mean Gaussian random path attenuation *ε* between the object and the DUT *3*, and a power delay profile comprising attenuation values *αᵢ* and delay values *τᵢ* for a plurality of *i* taps of a tapped delay line fading model. $Δ t = 2 {rc}_{0} ⇒ Δ t ∼ r$ $Δ {f}_{D} \approx {f}_{0} \frac{2 v}{{c}_{0}} ⇒ Δ {f}_{D} ∼ v {f}_{0}$ $α = \frac{{P}_{Rx}}{{P}_{Tx}} = {G}_{Tx} \frac{1}{4 {πr}^{2}} σ \frac{1}{4 {πr}^{2}} {A}_{eff , Rx} ⇒ α ∼ \frac{σ}{{r}^{4}}$ $α ′ = \frac{{P}_{Rx}}{{P}_{Tx}} = {G}_{Tx} \frac{1}{4 {πr}^{2}} εσε \frac{1}{4 {πr}^{2}} {A}_{eff , Rx} ⇒ \frac{α ′}{α} ∼ {ε}^{2}$

More specifically, the signal parameter adaptation circuits *13, 13A-Z* may comprise one or more of: a tunable delay circuit *13A* (e.g., analog tunable delay line or equivalent DSP filter implementation) for delaying the RF signal 2 in accordance with the delay *Δt* of the object, a tunable frequency shift circuit *13B* (e.g., analog complex frequency shifter, or equivalent DSP filter implementation) for shifting the frequency *f₀* of the RF signal *2* in accordance with the frequency shift *Δf_{D}* of the object and the estimated frequency offset *Δf* of the RF signal *2*, and a tunable attenuation circuit *13Z* (e.g., analog variable attenuator, or equivalent DSP filter implementation) for attenuating the RF signal 2 in accordance with the attenuation *α* of the object. The signal parameter adaptation circuits *13, 13A-Z* may further comprise one of: a fading emulation circuit *13C* (e.g, a DSP filter implementation) for attenuating the RF signal *2* in accordance with the zero-mean Gaussian random path attenuation *ε*, and a fading emulation circuit *13C* (e.g, a DSP filter implementation) for attenuating and delaying the RF signal *2* in accordance with the power delay profile.

Shifting the frequency *f₀*→ *f₀+*Δ*f* of the RF signal *2* in accordance with the frequency shift *Δf_{D}* (due to the simulated radial velocity v) of the object and the estimated frequency offset *Δf* of the RF signal 2 may be outlined as follows: $Δ {f}_{D} ′ \approx {f}_{0} ′ \frac{2 v}{{c}_{0}} = \left({f}_{0}+Δf\right) \frac{2 v}{{c}_{0}} = Δ {f}_{D} + Δ f \frac{2 v}{{c}_{0}}$

In other words, the estimated frequency offset *Δf* of the frequency *f₀* of the RF signal 2 yields a corresponding offset $Δ f \frac{2 v}{{c}_{0}}$*Δf* of the frequency shift *Δf_{D}* of the object. Said corresponding offset can be taken into account automatically by the tunable frequency shift circuit *13B,* besides the frequency shift *Δf_{D}* of the object (at frequency *f₀*)*.*

The transmitter *14* is configured for transmitting the adapted RF signal *2'* to the DUT 3, wherein the adapted RF signal *2'* simulates a reflection of the RF signal *2* by the object or an RF fading of the RF signal *2.*

Evidently, the adapted RF signal *2'* may be a radar signal, too. Accordingly, the transmitter *14* may comprise a radar transmitter.

The receiver *11* and the transmitter *12* may form part of a transceiver *11, 12* being connected to an antenna (shown as triangular shape in FIG. 1) mediating between wireline transmission and wireless transmission of the RF signals *2, 2'.*

The user notification circuit *15,* if any, is configured for notifying a user of the device *1, 1A* of the estimated signal variation-over-time parameters *131* of the RF signal *2* relative to corresponding user-provided signal parameters *121* of the RF signal *2.* In other words, the signal variation-over-time parameters *131* of the RF signal *2* may be used to distinguish between the wanted RF signal and interferers.

Also the user-provided signal parameters *121* of the RF signal *2* may comprise one or more of: a timing of the RF signal *2,* a frequency *f₀* of the RF signal *2,* and an average power of the RF signal *2.*

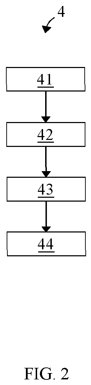

FIG. 2 illustrates a method 4 in accordance with the present disclosure.

The method *4* is suitable for simulating an RF reflective object.

The method *4* comprises a step of receiving *41* an RF signal *2* from a device under test, DUT *3.*

The method *4* further comprises a step of estimating *42,* based on an analysis of the RF signal *2,* one or more signal variation-over-time parameters *131* of the RF signal *2.*

The method *4* further comprises a step of adapting *43* one or more signal parameters of the RF signal *2* in real-time as a function of one or more simulation parameters *132* and the one or more estimated signal variation-over-time parameters *131* of the RF signal *2.*

The method *4* further comprises a step of transmitting *44* the adapted RF signal *2*' to the DUT *3,* the adapted RF signal *2*' simulating a reflection of the RF signal *2* by the object.

The method *4* may be performed by a device *1* for simulating an RF reflective object according to claim 1.

## Claims

1. A device (1) for simulating an RF reflective object, the device (1) comprising
- a receiver (11), configured for receiving an RF signal from a device under test, DUT;
- a signal variation parameter estimation circuit (12), configured for estimating, based on an analysis of the RF signal, one or more signal variation-over-time parameters of the RF signal;
- one or more signal parameter adaptation circuits (13), configured for adapting one or more signal parameters of the RF signal in real-time as a function of one or more simulation parameters, and the one or more estimated signal variation-over-time parameters of the RF signal; and
- a transmitter (14), configured for transmitting the adapted RF signal to the DUT, the adapted RF signal simulating a reflection of the RF signal by the object,
wherein, the simulation parameters comprise one or more of:
- a delay of the object in accordance with a simulated radial distance of the object relative to the DUT,
- a frequency shift of the object in accordance with a simulated radial velocity of the object relative to the DUT, and
- an attenuation of the object in accordance with a simulated cross-sectional area of the object and the simulated radial distance of the object relative to the DUT, and **characterized in that**, the simulation parameters further comprise one of:
- a zero-mean Gaussian random path attenuation between the object and the DUT, and
- a power delay profile comprising attenuation values and delay values for a plurality of taps of a tapped delay line fading model.

2. A device for simulating RF fading, the device comprising
- an input (11), configured for receiving an RF signal;
- a signal variation parameter estimation circuit (12), configured for estimating, based on an analysis of the RF signal, one or more signal variation-over-time parameters of the RF signal;
- one or more signal parameter adaptation circuits (13), configured for adapting one or more signal parameters of the RF signal in real-time as a function of one or more simulation parameters, and the one or more estimated signal variation-over-time parameters of the RF signal; and
- a transmitter (14), configured for transmitting the adapted RF signal to a Device Under Test, DUT, the adapted RF signal simulating an RF fading of the RF signal,
wherein, the simulation parameters comprise one or more of:
- a delay of the object in accordance with a simulated radial distance of the object relative to the DUT,
- a frequency shift of the object in accordance with a simulated radial velocity of the object relative to the DUT, and
- an attenuation of the object in accordance with a simulated cross-sectional area of the object and the simulated radial distance of the object relative to the DUT, and
**characterized in that**, the simulation parameters further comprise one of:
- a zero-mean Gaussian random path attenuation between the object and the DUT, and
- a power delay profile comprising attenuation values and delay values for a plurality of taps of a tapped delay line fading model.

3. The device of claim 1 or claim 2,
the RF signal and the adapted RF signal being radar signals.

4. The device of any of claims 1 to 3,
the signal parameters of the RF signal comprising one or more of:
- a timing of the RF signal,
- a frequency of the RF signal, and
- an average power of the RF signal.

5. The device of any of the preceding claims,
the estimated signal variation-over-time parameters of the RF signal comprising:
- an estimated frequency offset of the RF signal.

6. The device of any of the preceding claims,
the signal parameter adaptation circuits (13) respectively being configured for adapting one of the signal parameters of the RF signal.

7. The device of any of the preceding claims,
the signal parameter adaptation circuits comprising one or more of:
- a tunable delay circuit for delaying the RF signal in accordance with the delay of the object,
- a tunable frequency shift circuit for shifting the frequency of the RF signal in accordance with the frequency shift of the object and the estimated frequency offset of the RF signal, and
- a tunable attenuation circuit for attenuating the RF signal in accordance with the attenuation of the object.

8. The device of any of the preceding claims,
the signal parameter adaptation circuits (13) further comprising one of:
- a fading emulation circuit for attenuating the RF signal in accordance with the zero-mean Gaussian random path attenuation, and
- a fading emulation circuit for attenuating and delaying the RF signal in accordance with the power delay profile.

9. The device of any of the preceding claims, further comprising
- a user notification circuit (15) for notifying a user of the device of the estimated signal variation-over-time parameters of the RF signal relative to corresponding user-provided signal parameters of the RF signal.

10. A measurement system, comprising
- a device (1) according to any of the preceding claims; and
- a device under test, DUT, being a radar sensor preferably for automotive applications.

11. A method for simulating an RF reflective object, the method comprising
- receiving (11) an RF signal from a device under test, DUT;
- estimating (12), based on an analysis of the RF signal, one or more signal variation-over-time parameters of the RF signal;
- adapting (13) one or more signal parameters of the RF signal in real-time as a function of one or more simulation parameters and the one or more estimated signal variation-over-time parameters of the RF signal; and
- transmitting (14) the adapted RF signal to the DUT, the adapted RF signal simulating a reflection of the RF signal by the object,
wherein, the simulation parameters comprise one or more of:
- a delay of the object in accordance with a simulated radial distance of the object relative to the DUT,
- a frequency shift of the object in accordance with a simulated radial velocity of the object relative to the DUT, and
- an attenuation of the object in accordance with a simulated cross-sectional area of the object and the simulated radial distance of the object relative to the DUT, and
**characterized in that**, the simulation parameters further comprise one of:
- a zero-mean Gaussian random path attenuation between the object and the DUT, and
- a power delay profile comprising attenuation values and delay values for a plurality of taps of a tapped delay line fading model.

12. The method of claim 11,
being performed by a device (1) for simulating an RF reflective object according to any of claims 1 and claims 3-9, when dependent on claim 1.

## Patentansprüche

1. Vorrichtung (1) zum Simulieren eines HF-reflektierenden Objekts, die Vorrichtung (1) umfassend
- einen Empfänger (11), der zum Empfangen eines HF-Signals von einem Prüfling, DUT, konfiguriert ist;
- eine Signalvariationsparameterschätzschaltung (12), die zum Schätzen, basierend auf einer Analyse des HF-Signals, eines oder mehrerer Parameter einer Signalvariation im Laufe der Zeit des HF-Signals konfiguriert ist;
- eine oder mehrere Signalparameteranpassungsschaltungen (13), die zum Anpassen eines oder mehrerer Signalparameter des HF-Signals in Echtzeit als eine Funktion eines oder mehrerer Simulationsparameter und des einen oder der mehreren geschätzten Parameter der Signalvariation im Laufe der Zeit des HF-Signals konfiguriert sind; und
- ein Sender (14), der zum Senden des angepassten HF-Signals an den DUT konfiguriert ist, wobei das angepasste HF-Signal eine Reflexion des HF-Signals durch das Objekt simuliert, wobei die Simulationsparameter eine oder mehrere umfassen von:
- einer Verzögerung des Objekts gemäß einem simulierten radialen Abstand des Objekts relativ zu dem Prüfling,
- einer Frequenzverschiebung des Objekts gemäß einer simulierten radialen Geschwindigkeit des Objekts relativ zu dem Prüfling, und
- einer Dämpfung des Objekts gemäß einer simulierten Querschnittsfläche des Objekts und dem simulierten radialen Abstand des Objekts relativ zu dem DUT, und **dadurch gekennzeichnet, dass** die Simulationsparameter ferner eines umfassen von:
- einer mittelwertfreien Gaußschen Zufallspfaddämpfung zwischen dem Objekt und dem DUT, und
- einem Leistungsverzögerungsprofil, umfassend Dämpfungswerte und Verzögerungswerte für eine Vielzahl von Anzapfungen eines Schwundmodells mit angezapfter Verzögerungsleitung.

2. Vorrichtung zum Simulieren eines HF-Schwunds, die Vorrichtung umfassend
- einen Eingang (11), der zum Empfangen eines HF-Signals konfiguriert ist;
- eine Signalvariationsparameterschätzschaltung (12), die zum Schätzen, basierend auf einer Analyse des HF-Signals, eines oder mehrerer Parameter der Signalvariation im Laufe der Zeit des HF-Signals konfiguriert ist;
- eine oder mehrere Signalparameteranpassungsschaltungen (13), die zum Anpassen eines oder mehrerer Signalparameter des HF-Signals in Echtzeit als eine Funktion eines oder mehrerer Simulationsparameter und des einen oder der mehreren geschätzten Parameter der Signalvariation im Laufe der Zeit des HF-Signals konfiguriert sind; und
- einen Sender (14), der zum Senden des angepassten HF-Signals an einen Prüfling, DUT, konfiguriert ist, wobei das angepasste HF-Signal einen HF-Schwund des HF-Signals simuliert, wobei die Simulationsparameter eine oder mehrere umfassen von:
- einer Verzögerung des Objekts gemäß einem simulierten radialen Abstand des Objekts relativ zu dem Prüfling,
- einer Frequenzverschiebung des Objekts gemäß einer simulierten radialen Geschwindigkeit des Objekts relativ zu dem Prüfling, und
- einer Dämpfung des Objekts gemäß einer simulierten Querschnittsfläche des Objekts und dem simulierten radialen Abstand des Objekts relativ zu dem DUT, und **dadurch gekennzeichnet, dass** die Simulationsparameter ferner eines umfassen von:
- einer mittelwertfreien Gaußschen Zufallspfaddämpfung zwischen dem Objekt und dem DUT, und
- einem Leistungsverzögerungsprofil, umfassend Dämpfungswerte und Verzögerungswerte für eine Vielzahl von Anzapfungen eines Schwundmodells mit angezapfter Verzögerungsleitung.

3. Vorrichtung nach Anspruch 1 oder 2,
wobei das HF-Signal und das angepasste HF-Signal Radarsignale sind.

4. Vorrichtung nach einem der Ansprüche 1 bis 3,
die Signalparameter des HF-Signals umfassend eine oder mehrere von:
- einer Zeitsteuerung des HF-Signals,
- einer Frequenz des HF-Signals, und
- einer durchschnittliche Leistung des HF-Signals.

5. Vorrichtung nach einem der vorstehenden Ansprüche,
die geschätzten Parameter der Signalvariation im Laufe der Zeit des HF-Signals umfassend:
- einen geschätzten Frequenzversatz des HF-Signals.

6. Vorrichtung nach einem der vorstehenden Ansprüche,
wobei die Signalparameteranpassungsschaltungen (13) jeweils zum Anpassen eines der Signalparameter des HF-Signals konfiguriert sind.

7. Vorrichtung nach einem der vorstehenden Ansprüche,
die Signalparameteranpassungsschaltungen umfassend eine oder mehrere von:
- einer abstimmbaren Verzögerungsschaltung zum Verzögern des HF-Signals gemäß der Verzögerung des Objekts,
- einer abstimmbaren Frequenzverschiebungsschaltung zum Verschieben der Frequenz des HF-Signals gemäß der Frequenzverschiebung des Objekts und dem geschätzten Frequenzversatz des HF-Signals, und
- einer abstimmbaren Dämpfungsschaltung zum Dämpfen des HF-Signals gemäß der Dämpfung des Objekts.

8. Vorrichtung nach einem der vorstehenden Ansprüche,
die Signalparameteranpassungsschaltungen (13) ferner umfassend eine von:
- einer Schwundemulationsschaltung zum Dämpfen des HF-Signals gemäß der mittelwertfreien Gaußschen Zufallspfaddämpfung, und
- einer Schwundemulationsschaltung zum Dämpfen und Verzögern des HF-Signals gemäß dem Leistungsverzögerungsprofil.

9. Vorrichtung nach einem der vorstehenden Ansprüche, ferner umfassend
- eine Benutzerbenachrichtigungsschaltung (15) zum Benachrichtigen eines Benutzers der Vorrichtung über die geschätzten Parameter der Signalvariation im Laufe der Zeit des HF-Signals relativ zu entsprechenden dem Benutzer bereitgestellten Signalparametern des HF-Signals.

10. Messsystem, umfassend
- eine Vorrichtung (1) nach einem der vorstehenden Ansprüche; und
- einen Prüfling, DUT, der ein Radarsensor, vorzugsweise für Kraftfahrzeuganwendungen, ist.

11. Verfahren zum Simulieren eines HF-reflektierenden Objekts, das Verfahren umfassend
- Empfangen (11) eines HF-Signals von einem Prüfling, DUT;
- Schätzen (12), basierend auf einer Analyse des HF-Signals, eines oder mehrerer Parameter der Signalvariation im Laufe der Zeit des HF-Signals;
- Anpassen (13) eines oder mehrerer Signalparameter des HF-Signals in Echtzeit als Funktion eines oder mehrerer Simulationsparameter und des einen oder der mehreren geschätzten Parameter der Signalvariation im Laufe der Zeit des HF-Signals; und
- Senden (14) des angepassten HF-Signals an den DUT, wobei das angepasste HF-Signal eine Reflexion des HF-Signals durch das Objekt simuliert, wobei die Simulationsparameter eine oder mehrere umfassen von:
- einer Verzögerung des Objekts gemäß einem simulierten radialen Abstand des Objekts relativ zu dem Prüfling,
- einer Frequenzverschiebung des Objekts gemäß einer simulierten radialen Geschwindigkeit des Objekts relativ zu dem Prüfling, und
- einer Dämpfung des Objekts gemäß einer simulierten Querschnittsfläche des Objekts und dem simulierten radialen Abstand des Objekts relativ zu dem DUT, und **dadurch gekennzeichnet, dass** die Simulationsparameter ferner eines umfassen von:
- einer mittelwertfreien Gaußschen Zufallspfaddämpfung zwischen dem Objekt und dem DUT, und
- einem Leistungsverzögerungsprofil, umfassend Dämpfungswerte und Verzögerungswerte für eine Vielzahl von Anzapfungen eines Schwundmodells mit angezapfter Verzögerungsleitung.

12. Verfahren nach Anspruch 11,
das durch eine Vorrichtung (1) zum Simulieren eines HF-reflektierenden Objekts nach einem der Ansprüche 1 und der Ansprüche 3 bis 9, wenn abhängig von Anspruch 1, durchgeführt wird.

## Revendications

1. Dispositif (1) permettant de simuler un objet réfléchissant les RF, le dispositif (1) comprenant
- un récepteur (11), configuré pour recevoir un signal RF en provenance d'un dispositif soumis à l'essai, DSE ;
- un circuit d'estimation de paramètre de variation de signal (12), configuré pour estimer, sur la base d'une analyse du signal RF, un ou plusieurs paramètres de variation de signal au cours du temps du signal RF ;
- un ou plusieurs circuits d'adaptation de paramètre de signal (13), configurés pour adapter un ou plusieurs paramètres de signal du signal RF en temps réel en fonction d'un ou plusieurs paramètres de simulation, et du ou des paramètres estimés de variation de signal au cours du temps du signal RF ; et
- un émetteur (14), configuré pour transmettre le signal RF adapté au DSE, le signal RF adapté simulant une réflexion du signal RF par l'objet, dans lequel les paramètres de simulation comprennent un ou plusieurs parmi :
- un retard de l'objet conformément à une distance radiale simulée de l'objet par rapport au DSE,
- un déplacement de fréquence de l'objet conformément à une vitesse radiale simulée de l'objet par rapport au DSE, et
- une atténuation de l'objet conformément à une zone en coupe transversale simulée de l'objet et à la distance radiale simulée de l'objet par rapport au DSE, et **caractérisé en ce que** les paramètres de simulation comprennent en outre l'un parmi :
- une atténuation gaussienne de trajet aléatoire de moyenne nulle entre l'objet et le DSE, et
- un profil de retard de puissance comprenant des valeurs d'atténuation et des valeurs de retard pour une pluralité de prélèvements d'un modèle d'évanouissement de ligne de retard à prélèvements.

2. Dispositif permettant de simuler un évanouissement RF, le dispositif comprenant
- une entrée (11), configurée pour recevoir un signal RF ;
- un circuit d'estimation de paramètre de variation de signal (12), configuré pour estimer, sur la base d'une analyse du signal RF, un ou plusieurs paramètres de variation de signal au cours du temps du signal RF ;
- un ou plusieurs circuits d'adaptation de paramètre de signal (13), configurés pour adapter un ou plusieurs paramètres de signal du signal RF en temps réel en fonction d'un ou plusieurs paramètres de simulation, et du ou des paramètres estimés de variation de signal au cours du temps du signal RF ; et
- un émetteur (14), configuré pour transmettre le signal RF adapté à un dispositif soumis à l'essai, DSE, le signal RF adapté simulant un évanouissement RF du signal RF, dans lequel les paramètres de simulation comprennent un ou plusieurs parmi :
- un retard de l'objet conformément à une distance radiale simulée de l'objet par rapport au DSE,
- un déplacement de fréquence de l'objet conformément à une vitesse radiale simulée de l'objet par rapport au DSE, et
- une atténuation de l'objet conformément à une zone en coupe transversale simulée de l'objet et à la distance radiale simulée de l'objet par rapport au DSE, et **caractérisé en ce que** les paramètres de simulation comprennent en outre l'un parmi :
- une atténuation gaussienne de trajet aléatoire de moyenne nulle entre l'objet et le DSE, et
- un profil de retard de puissance comprenant des valeurs d'atténuation et des valeurs de retard pour une pluralité de prélèvements d'un modèle d'évanouissement de ligne de retard à prélèvements.

3. Dispositif selon la revendication 1 ou la revendication 2,
le signal RF et le signal RF adapté étant des signaux radar.

4. Dispositif selon l'une quelconque des revendications 1 à 3,
les paramètres de signal du signal RF comprenant un ou plusieurs parmi :
- une temporisation du signal RF,
- une fréquence du signal RF, et
- une puissance moyenne du signal RF.

5. Dispositif selon l'une quelconque des revendications précédentes,
les paramètres estimés de variation de signal au cours du temps du signal RF comprenant :
- un décalage de fréquence estimé du signal RF.

6. Dispositif selon l'une quelconque des revendications précédentes,
les circuits d'adaptation de paramètre de signal (13) étant respectivement configurés pour adapter l'un des paramètres de signal du signal RF.

7. Dispositif selon l'une quelconque des revendications précédentes,
les circuits d'adaptation de paramètre de signal comprenant un ou plusieurs parmi :
- un circuit de retard accordable permettant de retarder le signal RF conformément au retard de l'objet,
- un circuit de déplacement de fréquence accordable permettant de déplacer la fréquence du signal RF conformément au déplacement de fréquence de l'objet et au décalage de fréquence estimé du signal RF, et
- un circuit d'atténuation accordable permettant d'atténuer le signal RF conformément à l'atténuation de l'objet.

8. Dispositif selon l'une quelconque des revendications précédentes,
les circuits d'adaptation de paramètre de signal (13) comprenant en outre l'un parmi :
- un circuit d'émulation d'évanouissement permettant d'atténuer le signal RF conformément à l'atténuation gaussienne de trajet aléatoire de moyenne nulle, et
- un circuit d'émulation d'évanouissement permettant d'atténuer et de retarder le signal RF conformément au profil de retard de puissance.

9. Dispositif selon l'une quelconque des revendications précédentes, comprenant en outre
- un circuit de notification d'utilisateur (15) permettant de notifier un utilisateur du dispositif des paramètres estimés de variation au cours du temps du signal RF par rapport aux paramètres de signal fournis par l'utilisateur correspondants du signal RF.

10. Système de mesure, comprenant
- un dispositif (1) selon l'une quelconque des revendications précédentes ; et
- un dispositif soumis à l'essai, DSE, étant un capteur radar, de préférence pour des applications automobiles.

11. Procédé de simulation d'un objet réfléchissant les RF, le procédé comprenant
- la réception (11) d'un signal RF en provenance d'un dispositif soumis à l'essai, DSE ;
- l'estimation (12), sur la base d'une analyse du signal RF, d'un ou plusieurs paramètres de variation au cours du temps du signal RF ;
- l'adaptation (13) d'un ou plusieurs paramètres de signal du signal RF en temps réel en fonction d'un ou plusieurs paramètres de simulation et du ou des paramètres estimés de variation de signal au cours du temps du signal RF ; et
- la transmission (14) du signal RF adapté au DSE, le signal RF adapté simulant une réflexion du signal RF par l'objet, dans lequel les paramètres de simulation comprennent un ou plusieurs parmi :
- un retard de l'objet conformément à une distance radiale simulée de l'objet par rapport au DSE,
- un déplacement de fréquence de l'objet conformément à une vitesse radiale simulée de l'objet par rapport au DSE, et
- une atténuation de l'objet conformément à une zone en coupe transversale simulée de l'objet et à la distance radiale simulée de l'objet par rapport au DSE, et **caractérisé en ce que** les paramètres de simulation comprennent en outre l'un parmi :
- une atténuation gaussienne de trajet aléatoire de moyenne nulle entre l'objet et le DSE, et
- un profil de retard de puissance comprenant des valeurs d'atténuation et des valeurs de retard pour une pluralité de prélèvements d'un modèle d'évanouissement de ligne de retard à prélèvements.

12. Procédé selon la revendication 11,
étant effectué par un dispositif (1) permettant de simuler un objet réfléchissant les RF selon l'une quelconque des revendications 1 et des revendications 3 à 9 lorsqu'elles dépendent de la revendication 1.
